(19) Europäisches Patentamt
European Patent Office
Office européen des brevets

(11) **EP 4 703 432 A1**

(12) **EUROPEAN PATENT APPLICATION**
published in accordance with Art. 153(4) EPC

(43) Date of publication:
**04.03.2026 Bulletin 2026/10**

(21) Application number: **24796990.0**

(22) Date of filing: **23.04.2024**

(51) International Patent Classification (IPC):
***C08L 101/00*** *(2006.01)* ***C01B 21/072*** *(2006.01)*
***C08K 3/01*** *(2018.01)* ***C08K 3/28*** *(2006.01)*
***C08L 83/05*** *(2006.01)* ***C08L 83/07*** *(2006.01)*

(52) Cooperative Patent Classification (CPC):
**C01B 21/072; C08K 3/01; C08K 3/28; C08L 83/04; C08L 101/00**

(86) International application number:
**PCT/JP2024/015815**

(87) International publication number:
**WO 2024/225244 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.04.2023 JP 2023071483**

(71) Applicant: **TOKUYAMA CORPORATION**
**Yamaguchi 745-8648 (JP)**

(72) Inventors:
- **TSUJIMOTO, Keijiro**
**Shunan-shi, Yamaguchi 745-8648 (JP)**
- **SAKAMOTO, Atsushi**
**Shunan-shi, Yamaguchi 745-8648 (JP)**

(74) Representative: **Dehns**
**10 Old Bailey**
**London EC4M 7NG (GB)**

(54) **RESIN COMPOSITION**

(57) An object is to provide a resin composition with which an electronic component excellent in heat dissipation can be easily produced. A resin composition includes a resin and an aluminum nitride-based thermally conductive filler, wherein a thermal conductivity of the resin composition measured by a hot disk method is 6.0 W/m·K or more, wherein a discharge amount when the resin composition is charged into a syringe having a tip discharge portion with an inner diameter of 2 mm and discharged at a discharge pressure of 0.62 MPa is 10 g/min or more, and wherein a thickness of the resin composition measured after 0.02 ml thereof is sandwiched between two 10 mm × 10 mm silicon chips and a force of 50 N is applied to the resin composition for 60 seconds is 100 μm or less.

[Fig. 1]

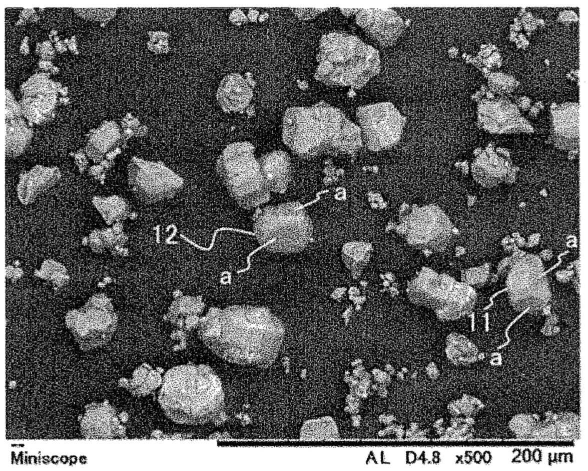


EP 4 703 432 A1

## Description

Technical Field

The present invention relates to a resin composition containing a thermally conductive filler.

Background Art

Along with the enhancement of performance of electronic devices, semiconductor elements are advancing toward higher density and greater packaging integration. Accordingly, it is important to further efficiently dissipate heat generated from electronic components constituting the electronic devices.

For example, in order to efficiently dissipate heat generated from an electronic component, a heat dissipation member is used in a semiconductor device. The heat dissipation member is a material for alleviating thermal resistance of a path for releasing heat generated from a semiconductor element to, for example, a heat sink or a housing, and various forms such as sheets, gels, and greases are used.

As the heat dissipation member, a resin composition in which a silicone resin having excellent heat resistance is filled with a thermally conductive filler such as aluminum nitride is typical (for example, Patent Documents 1 and 2).

The resin composition used as such a heat dissipation member is required to have high thermal conductivity in order to efficiently release heat. As a method for enhancing the thermal conductivity, a method of increasing a filling rate of the thermally conductive filler or a method of efficiently forming a thermal path by combining a plurality of thermally conductive fillers having different average particle diameters is known.

In addition, in order to efficiently release heat from the electronic component, it is also effective to shorten a path of the heat sink or the housing from an electronic component that is a heat generation source as much as possible, that is, to reduce a thermal resistance by thinning the resin composition.

In order to obtain a high thermal conductivity, it is known to improve the filling property by combining a plurality of thermally conductive fillers having different average particle diameters. However, in the combination of thermal conductivity fillers conventionally used, thermally conductive fillers having large particle diameters are used, and there are limitations on thinning the resin composition.

For example, Patent Document 1 discloses, as a resin composition having excellent thermal conductivity, a resin composition containing thermally conductive inorganic particles of 100 μm or more and 500 μm or less and thermally conductive inorganic particles of 0.01 μm or more and less than 100 μm in a specific proportion. In Examples of Patent Document 1, specifically, a resin composition having a relatively high thermal conductivity of 6.4 to 11.1 W/mK is obtained. However, since a large amount of large filler with a particle diameter of 100 μm or more is used, a film cannot be formed with a thickness of 100 μm or less, and there are limitations on thinning the resin composition.

On the other hand, in a case where an attempt is made to prepare a resin composition without using a filler with a large particle diameter for the purpose of thinning the resin composition, there are limitations on combining a plurality of thermally conductive fillers with different average particle diameters, and it is difficult to obtain excellent filling properties. Therefore, in practice, this made it necessary to increase dischargeability and fluidity by reducing a mixing proportion of the thermally conductive filler, and there are limitations on improving the thermal conductivity.

For example, Patent Document 2 discloses a thermally conductive silicone composition (resin composition) having high thermal conductivity, favorable compressibility to 10 μm or less (capable of being thinned), and excellent dischargeability with a viscosity in a specific range. However, the thermal conductivity of the thermally conductive silicone composition disclosed in Examples of Patent Document 2 is 2.0 W/m·K at the maximum, and further improvement in thermal conductivity is required.

Citation List

Patent Documents

Patent Document 1: WO 2022/130665
Patent Document 2: JP 2020-169231 A

Summary of Invention

Technical Problem

As described above, in the conventional technique, in a case where the filling property of the filler is increased in order to obtain a high thermal conductivity, it is necessary to use a filler with a large particle diameter and it is difficult to make a film thin, and in a filler composition intended to make a film thin, a blending amount of the thermally conductive filler cannot be practically increased, and there are limitations on improving the thermal conductivity. Therefore, there has been room for improvement from the viewpoint of reducing a thermal resistance by thinning the resin composition to improve the heat dissipation of electronic components. Therefore, an object of the present invention is to provide a resin composition with which an electronic component excellent in heat dissipation can be easily produced.

Solution to Problem

The present inventors have intensively studied to achieve the above object. As a result, the present inventors have found that by using a thermally conductive filler containing particles having a specific shape, filling properties and thermal conductivity of the filler can be improved, and therefore even in a resin composition capable of being thinned without using a filler with a large particle diameter, discharging from a syringe is easy, and high thermal conductivity can be obtained. As a result of further studies, the present inventors has surprisingly found that even when the thickness of the resin composition is the same and a thermal conductivity of the resin composition is the same, in a case where a resin composition excellent in dischargeability from a syringe is used, a thermal resistance is significantly reduced as compared with a case where a resin composition inferior in dischargeability is used, and thus the present invention has been completed.

That is, the present invention provides a resin composition including a resin and an aluminum nitride-based thermally conductive filler,

wherein a thermal conductivity of the resin composition measured by a hot disk method is 6.0 W/m·K or more,
wherein a discharge amount when the resin composition is charged into a syringe having a tip discharge portion with an inner diameter of 2 mm and discharged at a pressure of 0.62 MPa is 10 g/min or more, and
wherein a thickness of the resin composition measured after 0.02 ml of the resin composition is sandwiched between two 10 mm × 10 mm silicon chips and a force of 50 N is applied to the resin composition for 60 seconds is 100 μm or less.

It is preferable that

the aluminum nitride-based thermally conductive filler contain, in a volume-based particle size distribution measured by a laser diffraction scattering method, particles having a particle diameter in a range of 100 μm or less in an amount of 90% or more in all particles,
wherein the aluminum nitride-based thermally conductive filler contains, in the volume-based particle size distribution, particles having a particle diameter of 5 μm or more and 100 μm or less in an amount of 40% to 90% in all particles, and particles having a particle diameter of 0.05 μm or more and less than 5 μm in an amount of 5% to 60% in all particles, and
wherein, in a scanning electron microscope image taken at a magnification of 500 times, 50% or more of particles having a particle diameter of 5 μm or more and 50 μm or less be multifaceted particles each having at least two flat surfaces. In addition, the multifaceted particles are preferably aluminum nitride particles.

The resin is preferably a silicone resin, and it is preferable that the silicone resin contain a polyorganosiloxane having, on average, two or more alkenyl groups bonded to a silicon atom in one molecule and a polyorganosiloxane having, on average, two or more hydrosilyl groups in one molecule, and the resin composition further include a platinum-based catalyst.

The resin composition can be used as a heat dissipation member, and examples of the present invention may include an electronic component including a heat dissipation member containing the resin composition and a base material having a heat generating portion, wherein the heat dissipation member is disposed so as to be in contact with the heat generating portion.

That is, the present invention relates to the following [1] to [7].

[1] A resin composition including a resin and an aluminum nitride-based thermally conductive filler,

wherein a thermal conductivity of the resin composition measured by a hot disk method is 6.0 W/m·K or more,
wherein a discharge amount when the resin composition is charged into a syringe having a tip discharge portion

with an inner diameter of 2 mm and discharged at a discharge pressure of 0.62 MPa is 10 g/min or more, and wherein a thickness of the resin composition measured after 0.02 ml of the resin composition is sandwiched between two 10 mm × 10 mm silicon chips and a force of 50 N is applied to the resin composition for 60 seconds is 100 μm or less.

[2] The resin composition according to [1],

wherein the thermally conductive filler contains, in a volume-based particle size distribution measured by a laser diffraction scattering method, particles having a particle diameter in a range of 100 μm or less in an amount of 90% or more in all particles,
wherein the thermally conductive filler contains, in the volume-based particle size distribution, particles having a particle diameter of 5 μm or more and 100 μm or less in an amount of 40% to 90% in all particles, and particles having a particle diameter of 0.05 μm or more and less than 5 μm in an amount of 5% to 60% in all particles, and wherein, in a scanning electron microscope image taken at a magnification of 500 times, 50% or more of particles having a particle diameter of 5 μm or more and 50 μm or less are multifaceted particles each having at least two flat surfaces.

[3] The resin composition according to [2], wherein the multifaceted particles are aluminum nitride particles.
[4] The resin composition according to any one of [1] to [3], wherein the resin is a silicone resin.
[5] The resin composition according to [4], wherein the silicone resin contains a polyorganosiloxane having, on average, two or more alkenyl groups bonded to a silicon atom in one molecule and a polyorganosiloxane having, on average, two or more hydrosilyl groups in one molecule, and the resin composition further includes a platinum-based catalyst.
[6] A heat dissipation member including the resin composition according to any one of [1] to [5].
[7] An electronic component including: the heat dissipation member according to [6]; and a base material having a heat generating portion, wherein the heat dissipation member is disposed so as to be in contact with the heat generating portion.

Advantageous Effects of Invention

The present invention provides a resin composition which has high thermal conductivity, is easily discharged from a syringe, and can be thinned. A thermal resistance can be extremely reduced by using such a resin composition as a heat dissipation member of an electronic component, and a heat generating portion of an electronic device can be efficiently cooled because the resin composition has high thermal conductivity. Furthermore, since the dischargeability is excellent, the manufacturing efficiency of the electronic component can be improved.

Brief Description of Drawings

[Fig. 1] a scanning electron microscope image taken at a magnification of 500 times of photographing multifaceted particles in a particle diameter range of 5 to 50 μm in one embodiment of an aluminum nitride powder of the present invention.

Description of Embodiments

Hereinafter, an example of an embodiment of the present invention will be described in detail. However, the present invention is not limited to the embodiment to be described below, and can be implemented in any modified form without departing from the gist of the present invention.

[Resin Composition]

A resin composition of the present invention includes a resin and an aluminum nitride-based thermally conductive filler, wherein a thermal conductivity of the resin composition measured by a hot disk method is 6.0 W/m·K or more, wherein a discharge amount when the resin composition is charged into a syringe having a tip discharge portion with an inner diameter of 2 mm and discharged at a discharge pressure of 0.62 MPa is 10 g/min or more, and wherein a thickness of the resin composition measured after 0.02 ml of the resin composition is sandwiched between two 10 mm × 10 mm silicon chips and a force of 50 N is applied to the resin composition for 60 seconds is 100 μm or less. By using the resin composition as a heat dissipation member, the thermal resistance can be made extremely low. In addition, it is possible to efficiently manufacture an electronic component that can allow a heat generating portion of an electronic device to be efficiently

cooled.

The resin composition, by having a thermal conductivity of 6.0 W/m·K or more, has a high thermal conductivity, and can impart high heat dissipation performance when used as a heat dissipation member. Accordingly, it is possible for the resin composition to allow a heat generating portion of an electronic device to be efficiently cooled. The thermal conductivity of the resin composition is preferably 8.0 W/m·K or more, and more preferably 10.0 W/m·K or more. An upper limit of the thermal conductivity is not particularly limited, and is preferably as high as possible, generally 20.0 W/m·K or less.

The thermal conductivity of the resin composition is measured by a hot disk method. Specifically, the measurement can be performed in a manner that the resin composition is hot-pressed at 100°C to give a sheet having a thickness of 7 mm, and the thermal conductivity of the sheet is measured by a thermal property measuring device using the hot disk method.

A discharge amount of the resin composition is 10 g/min or more when the resin composition is charged in a syringe having a tip discharge portion with an inner diameter of 2 mm and discharged at a discharge pressure of 0.62 MPa. By the resin composition having the property, even when the thermal conductivity and the thickness of the resin composition phase are made the same, the thermal resistance can be reduced as compared to the case of using the resin composition having a small discharge amount. Although the reason for this is not clear, the present inventors presume as follows.

In general, a thermal resistance R is represented by a formula of R = L/TC + Rc where a thickness of a resin composition layer is denoted by L, a thermal conductivity of a resin composition is denoted by TC, and a contact thermal resistance between a base material and a resin composition is denoted by Rc. In the present invention, the present inventors presume that the contact thermal resistance between the base material and the resin composition contributes, since the thermal resistance is reduced not due to the value of L/TC. The present inventors presume that since the resin composition was smoothly applied onto a base material during manufacturing of an electronic component, the resin composition was laminated uniformly and without generating a gap, whereby the adhesion between the base material and the resin composition was improved, and the contact thermal resistance was reduced.

That is, in a case where the syringe dischargeability of the resin composition is poor, a large pressure is applied to the resin composition when the resin composition is discharged from a syringe and applied to a base material during manufacturing of an electronic component, and as a result, it becomes difficult for the resin composition to uniformly be extruded at the time of discharge. Therefore, it is presumed that the resin composition is not uniformly applied to a surface of the base material, or a fine gap is generated between the base material and the resin composition, so that a thermal path between the base material and the resin composition is hardly formed, and the contact thermal resistance cannot be sufficiently reduced. On the other hand, the present inventor presume that the resin composition of the present invention has characteristics of being excellent in syringe dischargeability, whereby the resin composition is uniformly applied to the surface of the base material, and furthermore, generation of fine gaps between the base material and the resin composition is easily suppressed, and the contact thermal resistance can be sufficiently reduced.

In addition, since the dischargeability is large, the manufacturing efficiency of the electronic component can be improved.

The discharge amount is preferably 15.0 g/min or more, and more preferably 30.0 g/min or more. When the discharge amount is too large, it may be difficult to control the discharge amount during manufacturing in some cases, and thus the discharge amount is preferably 500.0 g/min or less.

Measurement of the discharge amount is performed by filling a syringe having a tip discharge portion with an inner diameter of 2 mm with a resin composition and discharging the resin composition at 25°C and a discharge pressure of 0.62 MPa.

With regard to the resin composition, a thickness (corresponding to a bond line thickness, and hereinafter, may be referred to as "BLT") of the resin composition measured after 0.02 ml of the resin composition is sandwiched between two 10 mm × 10 mm silicon chips and a force of 50 N is applied to the resin composition for 60 seconds thereto is 100 μm or less. Having this property indicates that it is possible to easily form the present resin composition into a thin film having a thickness of 100 μm or less (that it is possible to reduce the thickness). Furthermore, by the present resin composition having this characteristic, it is possible to form a thin film form by a simple operation during manufacturing of an electronic component, and it is easy to dispose the thin film form on an electronic component simply and inexpensively. The BLT is preferably 70 μm or less, and more preferably 60 μm or less. As a result, it is easy to reduce the thermal resistance by disposing the thin film form on the electronic component and to enhance the manufacturing efficiency when disposing the thin film form during manufacturing of an electronic component. In particular, since the resin composition of the present invention has a BLT of 100 μm or less, it is possible to perform thin film formation even with a simple device that suppresses adverse effects on a base material and has a low pressure of about 0.5 MPa, and particularly, there is a great advantage in that a heat dissipation member can be produced simply and inexpensively. A lower limit of the BLT is not particularly limited, and when attempting to make the resin composition thinner, limitations may arise in the thermally conductive fillers that can be used, and it may be difficult to achieve both high thermal conductivity and high dischargeability. Therefore, the BLT is

preferably 10 μm or more, more preferably 20 μm or more, and particularly preferably 30 μm or more.

Measurement of the BLT is performed by sandwiching 0.02 ml of the resin composition between two 10 mm × 10 mm silicon chips and applying a force of 50 N thereto for 60 seconds. Specifically, the resin composition is weighed and placed on a silicon chip, another silicon chip is stacked thereon, the resin composition is sandwiched between two silicon chips, and a sample is obtained by pressing them with a force of 50 N for 60 seconds using a push-pull gauge (SVH-1000N manufactured by IMADA Co., Ltd.). Next, the thickness of the sample is measured with a micrometer (high-precision digimatic micrometer MDH-25MB manufactured by Mitutoyo Corporation), and the thickness (BLT) of the resin composition is calculated by subtracting the silicon chip part measured in advance.

[Resin]

The resin used in the resin composition of the present invention (that is, the resin constituting the resin composition of the present invention) is not particularly limited, and known resins can be used without particular limitation. Examples of the resin include thermosetting resins such as epoxy resins, epoxy resins into which mesogen groups are introduced (epoxy resins having a mesogen group), unsaturated polyester resins, polyimide resins, and phenol resins; thermoplastic resins such as polyethylene, polypropylene, polyamide, polycarbonate, and polyphenylene sulfide; rubbers such as ethylene propylene rubber and styrene butadiene rubber; and silicone resins.

Among these resins, it is preferable to use a silicone resin as the resin of the resin composition of the present invention. A silicone resin, since having high heat resistance, can stably exhibit performance for a long period of time when used for a heat dissipation member, although, due to its structure, intermolecular forces between silicone resin molecules are weak, and heat transfer between silicone resin molecules is poor as compared with other resins such as an epoxy resin. Therefore, in a case where a silicone resin is used, it was necessary to blend a large amount of thermally conductive fillers in order to obtain particularly high thermal conductivity. Therefore, in the silicone resin composition using a silicone resin, it is particularly difficult to achieve both the high thermal conductivity and the high syringe dischargeability. On the other hand, in the present invention, it is possible to achieve both the high thermal conductivity and the high syringe dischargeability, and as a result, it is easy to reduce the thermal resistance, and thus it can be said that the effect is particularly large.

The silicone resin may be a curable silicone resin or a non-curable silicone resin.

Examples of the curable silicone resin include addition reaction type silicone resins and condensation reaction type silicone resins. In a case where a hydrolyzable filler such as aluminum nitride is used as the thermally conductive filler, it is desirable to use an addition reaction type silicone resin.

Examples of the addition reaction type silicone resin include a mixture of a polyorganosiloxane (a) having an alkenyl group and a polyorganosiloxane (b) having a hydrosilyl group, and those partially or entirely crosslinked by hydrosilylation reaction using a catalyst. That is, the silicone resin may be a mixture containing the polyorganosiloxane (a) having an alkenyl group and the polyorganosiloxane (b) having a hydrosilyl group, or may be a crosslinked product of the mixture.

In addition, as the silicone resin, for example, an alkoxysilyl group-containing compound (c), and dimethylpolysiloxane can be used.

For example, in a case where the alkoxysilyl group-containing compound (c) is used as the silicone resin, the silicone resin may be composed of only the alkoxysilyl group-containing compound (c), or may be a mixture of the polyorganosiloxane (a) having an alkenyl group, the polyorganosiloxane (b) having a hydrosilyl group, and the alkoxysilyl group-containing compound (c), or may be a crosslinked product of the mixture.

In addition, the dimethylpolysiloxane that can be used as the silicone resin may also correspond to the alkoxysilyl group-containing compound (c), such as dimethylpolysiloxane in which one molecular chain terminal is blocked with an alkoxysilyl group.

In a preferred and exemplary aspect of the present invention, the silicone resin is a mixture of the polyorganosiloxane (a) having an alkenyl group, the polyorganosiloxane (b) having a hydrosilyl group, and the alkoxysilyl group-containing compound (c), or a crosslinked product of the mixture.

· Polyorganosiloxane (a) Having Alkenyl Group

Examples of the polyorganosiloxane (a) having an alkenyl group include a polyorganosiloxane represented by the average composition formula $R^x_jR^y_kSiO_{[4-(j+k)]/2}$. One kind of the polyorganosiloxane (a) may be used or two or more kinds thereof may be used (that is, the polyorganosiloxane (a) may be used singly or in combination of two or more kinds thereof).

$R^x$ is an alkenyl group. The alkenyl group is preferably a $C_{2-8}$ group, examples thereof include a vinyl group, an allyl group, a 1-butenyl group, and a 1-hexenyl group, and a vinyl group is preferable.

The number of alkenyl groups bonded to a silicon atom in one molecule of the polyorganosiloxane (a) is

preferably one or more on average, and more preferably two or more on average. In other words, the polyorganosiloxane (a) contains, in one molecule, preferably one or more alkenyl groups bonded to a silicon atom on average, and more preferably two or more alkenyl groups on average. In addition, the alkenyl group may be bonded to a silicon atom at the molecular chain terminal, bonded to a silicon atom in the middle of the molecular chain, or bonded to both of them, and it is preferable that the alkenyl group is bonded to at least a silicon atom at the molecular chain terminal, particularly a silicon atom at both terminals of the molecular chain, from the viewpoint of, for example, the curing rate in a case where the present composition is cured as described below and physical properties of a cured product to be produced.

$R^y$ is a substituted or unsubstituted monovalent hydrocarbon group without any aliphatic unsaturated bond. The number of carbon atoms in $R^y$ is preferably from 1 to 12 and more preferably from 1 to 10. Examples of $R^y$ include alkyl groups such as a methyl group, an ethyl group, a propyl group, an isopropyl group, a butyl group, a hexyl group, an octyl group, a decyl group, and a dodecyl group; cycloalkyl groups such as a cyclopentyl group, a cyclohexyl group, and a cyclobutyl group; aryl groups such as a phenyl group, a tolyl group, a xylyl group, and a naphthyl group; aralkyl groups such as a benzyl group, a phenylethyl group, and a phenylpropyl group; and groups in which some or all of the hydrogen atoms in these groups are substituted with halogen atoms such as chlorine, fluorine, or bromine, or with a cyano group, for example, halogenated hydrocarbon groups such as a chloromethyl group, a trifluoropropyl group, a chlorophenyl group, a bromophenyl group, a dibromophenyl group, a tetrachlorophenyl group, a fluorophenyl group, and a difluorophenyl group; and cyanoalkyl groups such as an $\alpha$-cyanoethyl group, a $\beta$-cyanopropyl group, and a $\gamma$-cyanopropyl group. Among them, an alkyl group or an aryl group is preferable, and a methyl group or a phenyl group is more preferable.

Here, j and k are positive numbers satisfying $0 < j < 3$, $0 < k < 3$, and $1 < j + k < 3$, preferably $0.0005 \leq j \leq 1$, $1.5 \leq k < 2.4$, and $1.5 < j + k < 2.5$, and more preferably $0.001 \leq j \leq 0.5$, $1.8 \leq k \leq 2.1$, and $1.8 < j + k \leq 2.2$.

The molecular structure of the polyorganosiloxane (a) may be linear, branched, cyclic, or three-dimensional network, and the polyorganosiloxane (a) may be a mixture thereof.

The viscosity of the polyorganosiloxane (a) at 23°C is preferably from 0.01 to 100 Pa·s from the viewpoint of, for example, being able to obtain a composition having desired physical properties with good workability.

· Polyorganosiloxane (b) Having Hydrosilyl Group

Examples of the polyorganosiloxane (b) having a hydrosilyl group include a polyorganosiloxane represented by the average composition formula $R^z{}_mH_nSiO_{[4-(m+n)]/2}$. One kind or two or more kinds of the polyorganosiloxane (b) may be used.

$R^z$ is a substituted or unsubstituted monovalent hydrocarbon group without any aliphatic unsaturated bond. Examples of $R^z$ include alkyl groups such as a methyl group, an ethyl group, a propyl group, an isopropyl group, a butyl group, an isobutyl group, a tert-butyl group, a hexyl group, a cyclohexyl group, and an octyl group; aryl groups such as a phenyl group and a tolyl group; aralkyl groups such as a benzyl group and a phenylethyl group; and groups in which some or all of the hydrogen atoms of these groups are substituted with halogen atoms such as fluorine, chlorine, or bromine, or with a cyano group, for example, a chloromethyl group, a bromoethyl group, a trifluoropropyl group, and a cyanoethyl group. Among them, an alkyl group is preferable, and a methyl group is more preferable from the viewpoint of, for instance, ease of synthesis and cost performance.

Here, m and n are numbers that satisfy $0.5 \leq m \leq 2$, $0 < n \leq 2$ and $0.5 < m + n \leq 3$, and preferably $0.6 \leq m \leq 1.9$, $0.01 \leq n \leq 1.0$ and $0.6 < m + n \leq 2.8$. It is preferable that, on average, two or more hydrosilyl groups be present in one molecule. In other words, the polyorganosiloxane (b) preferably has, on average, two or more hydrosilyl groups in one molecule.

The amount of the polyorganosiloxane (b) used is an amount such that the number of hydrosilyl groups of the polyorganosiloxane (b) is from 0.1 to 2.0 and preferably from 0.2 to 1.5 per one alkenyl group bonded to a silicon atom of the polyorganosiloxane (a), from the viewpoint of, for example, easily obtaining a composition having desired physical properties with the physical properties hardly changing with time.

· Alkoxysilyl Group-containing Compound (c)

As the alkoxysilyl group-containing compound (c), it is preferable, from the viewpoint of being able to, for instance, easily obtain a composition with excellent workability, to use a compound having at least an alkoxysilyl group represented by the following formula (I) per one molecule.

$$-SiR^{11}{}_{3-z}(OR^{12})_z \qquad (I)$$

(In Formula (I), $R^{11}$ is a $C_{1-6}$ alkyl group and preferably a methyl group, $R^{12}$ is a $C_{1-6}$ alkyl group and preferably a methyl group, and z is 1, 2, or 3.)

Examples of the alkoxysilyl group-containing compound represented by the above formula (I) include a compound represented by the following formula (1).

In the following formula (1), it is not necessary that the repeating unit having the number a of repeating units, the repeating unit having the number b of repeating units, and the repeating unit having the number c of repeating units are arranged as shown in the following formula (1). For example, the repeating unit having the number c of repeating units may exist between the repeating unit having the number a of repeating units and the repeating unit having the number b of repeating units.

[Chemical Formula 1]

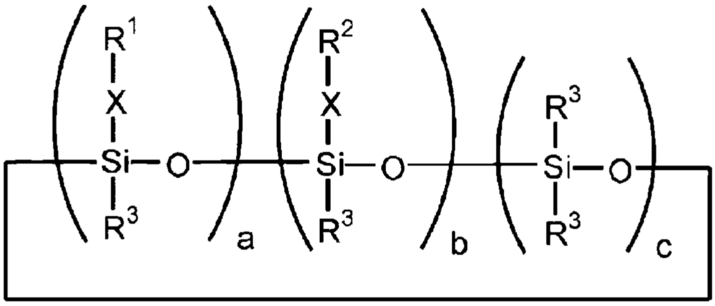

(1)

(In Formula (1), $R^1$ is a $C_{1-4}$ alkoxysilyl group-containing group, $R^2$ is a group having a siloxane unit represented by the following formula (2) or a $C_{6-18}$ monovalent hydrocarbon group, $R^3$ moieties are each independently a $C_{1-6}$ monovalent hydrocarbon group or a hydrogen atom, each X is independently a $C_{2-10}$ divalent hydrocarbon group or an ester bond-containing $C_{2-10}$ group, a and b are each independently an integer of 1 or more, c is an integer of 0 or more, and a + b + c is an integer of 4 or more.)

[Chemical Formula 2]

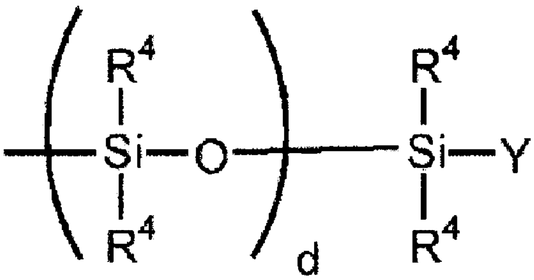

(2)

(In Formula (2), $R^4$ moieties are each independently a $C_{1-12}$ monovalent hydrocarbon group, Y is a $C_{1-4}$ alkoxysilyl group-containing group or an aliphatic unsaturated group, and d is an integer of 2 to 500, preferably an integer of 4 to 400, more preferably an integer of 10 to 200, and particularly preferably an integer of 10 to 60.)

Examples of the alkoxysilyl group-containing compound (c) include a compound represented by the following formula (3) in addition to the compound represented by the formula (1).

$$R^{21}{}_{e}R^{22}{}_{f}Si(OR^{23})_{4-(e+f)} \qquad (3)$$

(In Formula (3), $R^{21}$ moieties are each independently a $C_{6-15}$ alkyl group, $R^{22}$ moieties are each independently an unsubstituted or substituted $C_{1-12}$ monovalent hydrocarbon group (excluding a $C_{6-12}$ alkyl group), $R^{23}$ moieties are each independently a $C_{1-6}$ alkyl group, e is an integer of 0 to 3 and preferably 1, f is an integer of 0 to 2, and e + f is an integer of 1 to 3.)

Examples of $R^{21}$ include a hexyl group, an octyl group, a nonyl group, a decyl group, a dodecyl group, or a tetradecyl group. When the number of carbon atoms of the alkyl group of $R^{21}$ is from 6 to 15, the alkoxysilyl group-containing compound becomes a liquid at normal temperature and is easy to handle and thus preferable.

Examples of $R^{22}$ include alkyl groups such as a methyl group, an ethyl group, a propyl group, an isopropyl group, a butyl group, an isobutyl group, and a tert-butyl group; cycloalkyl groups such as a cyclopentyl group, a cyclohexyl group, and a cyclobutyl group; aliphatic unsaturated groups such as a vinyl group and an allyl group; aryl groups such as a phenyl group, a tolyl group, a xylyl group, and a naphthyl group; aralkyl groups such as a benzyl group, a 2-phenylethyl group, a 2-methyl-2-phenylethyl group, and a phenylpropyl group; and groups in which some or all of the hydrogen atoms in these

hydrocarbon groups are substituted with halogen atoms such as chlorine, fluorine, or bromine, or with a cyano group, for example, halogenated hydrocarbon groups such as a chloromethyl group, a trifluoropropyl group, a 3,3,3-trifluoropropyl group, a 2-(nonafluorobutyl)ethyl group, a 2-(heptadecafluorooctyl)ethyl group, a chlorophenyl group, a bromophenyl group, a dibromophenyl group, a tetrachlorophenyl group, a fluorophenyl group, and a difluorophenyl group; and cyanoalkyl groups such as an $\alpha$-cyanoethyl group, a $\beta$-cyanopropyl group, and a $\gamma$-cyanopropyl group. A methyl group and an ethyl group are preferable.

Examples of $R^{23}$ include a methyl group, an ethyl group, a propyl group, a butyl group, a pentyl group, or a hexyl group, and a methyl group and an ethyl group are preferable.

Examples of the compound in which e is 1 in the formula (3) include $C_6H_{13}Si(OCH_3)_3$, $C_{10}H_{21}Si(OCH_3)_3$, $C_{12}H_{23}Si(OCH_3)_3$, $C_{12}H_{25}Si(OC_2H_5)_3$, $C_{10}H_{21}Si(CH_3)(OCH_3)_2$, $C_{10}H_{21}Si(C_6H_3)(OCH_3)_2$, $C_{10}H_{21}Si(CH_3)(OC_2H_5)_2$, $C_{10}H_{21}Si(CH{=}CH_2)(OCH_3)_2$, or $C_{10}H_{21}Si(CH_2CH_2CF_3)(OCH_3)_2$.

Examples of the alkoxysilyl group-containing compound (c) include dimethylpolysiloxane in which one molecular chain terminal is capped with an alkoxysilyl group as represented by the following formula (4), in addition to the compound represented by the formula (1) and the compound represented by the formula (3).

[Chemical Formula 3]

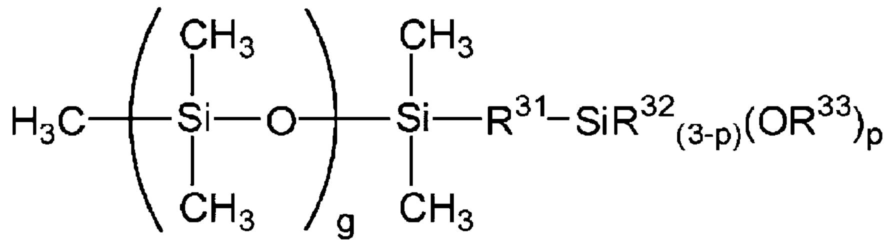

(4)

(In Formula (4), $R^{31}$ is -O- or $-CH_2CH_2-$; $R^{32}$ moieties are each independently an unsubstituted or substituted monovalent hydrocarbon group, and specific examples thereof include substantially the same group as each group exemplified for $R^{22}$ in the above formula (3), and among them, an alkyl group or an aryl group is preferable, and a methyl group or a phenyl group is more preferable; $R^{33}$ moieties are each independently a $C_{1-6}$ alkyl group and preferably a methyl group, an ethyl group, a propyl group, a butyl group, or a hexyl group; g is an integer of 5 to 100, preferably an integer of 5 to 70, and particularly preferably an integer of 10 to 50; and p is an integer of 1 to 3 and preferably 2 or 3.)

Note that examples of the alkoxysilyl group-containing compound (c) also include a compound in which one or more methyl groups in the formula (4) are substituted with a monovalent hydrocarbon group other than a methyl group.

Examples of the substituent include $C_{1-10}$ groups, and specific examples thereof include alkyl groups such as an ethyl group, a propyl group, a butyl group, a hexyl group, and an octyl group; cycloalkyl groups such as a cyclopentyl group and a cyclohexyl group; aryl groups such as a phenyl group and a tolyl group; aralkyl groups such as a 2-phenylethyl group and a 2-methyl-2-phenylethyl group; and halogenated hydrocarbon groups such as a 3,3,3-trifluoropropyl group, a 2-(nonafluorobutyl)ethyl group, a 2-(heptadecafluorooctyl)ethyl group, and a p-chlorophenyl group.

The alkoxysilyl group-containing compound (c) may be used alone, or may be used in combination with the polyorganosiloxane (a) having an alkenyl group and the polyorganosiloxane (b) having a hydrosilyl group. In the composition of the resin when used in combination with the polyorganosiloxane (a) having an alkenyl group and the polyorganosiloxane (b) having a hydrosilyl group, a blending amount of the alkoxysilyl group-containing compound (c) is preferably 5 parts by mass to 50 parts by mass, and more preferably 10 parts by mass to 40 parts by mass, with respect to 100 parts by mass of the total amount of the polyorganosiloxane (a) having an alkenyl group and the polyorganosiloxane (b) having a hydrosilyl group.

· Catalyst

As the catalyst for crosslinking the polyorganosiloxane (a) having an alkenyl group and the polyorganosiloxane (b) having a hydrosilyl group by a hydrosilylation reaction, for example, a known platinum-based catalyst can be used without limitation. Examples of the platinum-based catalyst include platinum black, secondary platinum chloride, chloroplatinic acid, a reaction product of chloroplatinic acid and monohydric alcohol, a complex of chloroplatinic acid and an olefin compound or vinylsiloxane, or platinum bis(acetylacetonate). One kind or two or more kinds of the catalyst may be used.

The amount of the catalyst used in terms of platinum element may be an amount required for crosslinking and may be adjusted, if appropriate, according to, for instance, a desired curing rate, and is usually preferably from 0.1 to 1000

ppm by mass based on the total amount of the polyorganosiloxanes (a) and (b).

[Aluminum Nitride-based Thermally Conductive Filler]

The aluminum nitride-based thermally conductive filler contained in the resin composition of the present invention is not particularly limited as long as the effects of the present invention are not impaired. Specifically, it is preferable that: the aluminum nitride-based thermally conductive filler contained in the resin composition of the present invention contain, in a volume-based particle size distribution measured by a laser diffraction scattering method, particles having a particle diameter in a range of 100 μm or less in an amount of 90% or more in all particles;

wherein the aluminum nitride-based thermally conductive filler contains, in the volume-based particle size distribution, particles having a particle diameter of 5 μm or more and 100 μm or less in an amount of 40% to 90% in all particles, and particles having a particle diameter of 0.05 μm or more and less than 5 μm in an amount of 5% to 60% in all particles; and

wherein, in a scanning electron microscope image taken at a magnification of 500 times, 50% or more of particles having a particle diameter of 5 μm or more and 50 μm or less be multifaceted particles each having at least two flat surfaces. That is, it is preferable that:

the aluminum nitride-based thermally conductive filler contained in the resin composition of the present invention be composed of particles (Pf) including 90% or more of particles (Pf1) having a particle diameter in a range of 100 μm or less when a volume-based particle size distribution is measured by a laser diffraction scattering method, where the amount of all particles is 100%;

wherein the particles (Pf) contain 40% to 90% of particles (Pf1A) having a particle diameter of 5 μm or more and 100 μm or less and 5% to 60% of particles (Pf1B) having a particle diameter of 0.05 μm or more and less than 5 um, and contain particles (Pf1A-1) having a particle diameter of 5 μm or more and 50 μm or less; and

wherein, in a scanning electron microscope image taken at a magnification of 500 times, the particles (Pf1A-1) include 50% or more of the multifaceted particles having at least two flat surfaces. By using such a thermally conductive filler, it is possible to easily prepare a resin composition having the thermal conductivity of 6.0 W/m·K or more, the discharge amount of 10 g/min or more, and the thickness of the resin composition of 100 μm or less.

The aluminum nitride-based thermally conductive filler in the present invention is one in which the proportion of aluminum nitride in the total amount of the thermally conductive filler is 40 vol% or more. That is, the aluminum nitride-based thermally conductive filler in the present invention contains 40 vol% or more of aluminum nitride. Aluminum nitride has high thermal conductivity, and it is easy to obtain a resin composition having high thermal conductivity. The proportion of the aluminum nitride in the total amount of the thermally conductive filler is preferably 50 vol% or more, and more preferably 60 vol% or more.

The thermally conductive filler may be composed of only aluminum nitride, or as described later, may further contain a filler other than aluminum nitride (for example, aluminum oxide, boron nitride, magnesium oxide, zinc oxide, silicon carbide, silicon nitride, or diamond), in addition to aluminum nitride. In a preferred and exemplary aspect of the present invention, the thermally conductive filler contains aluminum nitride and aluminum oxide.

When the proportion of particles having a particle diameter of 100 μm or less (that is, the "particles (Pf1)") in all particles of the thermally conductive filler is 90% or more in volume-based particle size distribution measured by a laser diffraction scattering method, the proportion of fillers having a particle diameter of more than 100 μm contained in the resin composition can be reduced. When a large amount of a large filler is contained in the resin composition, the filler becomes an obstacle when the resin composition is thinned, so that it is difficult to efficiently thin the resin composition, or in some cases, thinning itself becomes impossible. The proportion of particles having a particle diameter in the range of 100 μm or less (that is, the "particles (Pf1)") in the thermally conductive filler is preferably 97% or more, and most preferably 100%.

When the thermally conductive filler contains particles having different particle diameters, with the proportion of particles having a particle diameter of 5 μm or more and less than 100 μm (that is, the "particles (Pf1A)") being 40% to 90% in all particles and the proportion of particles having a particle diameter of 0.05 μm or more and less than 5 μm (that is, the "particles (Pf1B)") being 5% to 60% in all particles in the volume-based particle size distribution, a structure close to a close-packed structure is easily obtained when the resin is efficiently filled with the filler, and high thermal conductivity and high dischargeability are easily obtained. In the volume-based particle size distribution, the proportion of particles having a particle diameter of 5 μm or more and 100 μm or less (that is, the "particles (Pf1A)") in all the particles is more preferably 45% to 80%, and still more preferably 47% to 70%. In the volume-based particle size distribution, the proportion of particles having a particle diameter of 0.05 μm or more and less than 5 μm (that is, the "particles (Pf1B)") in all the particles is more preferably 20% to 55%, and still more preferably 30% to 53%.

The volume-based particle size distribution measured by the laser diffraction scattering method in the present

invention is obtained by dispersing a thermally conductive filler in a solution obtained by adding a 5% aqueous sodium pyrophosphate solution to 90 ml of water, and further dispersing the mixture with a homogenizer, and measuring the dispersion on a volume basis with a laser diffraction particle size distribution apparatus (for example, "MICROTRAC-MT 3300 EXII" manufactured by MicrotracBEL Corp.). In a case where a plurality of fillers are mixed and used as the thermally conductive filler, the particle size distribution of each filler may be measured and then synthesized by calculation to obtain a volume-based particle size distribution.

In the thermally conductive filler, 50% or more of particles (that is, the "particles (Pf1A-1)") having a particle diameter of 5 μm or more and 50 μm or less in a scanning electron microscope image taken at a magnification of 500 times are multifaceted particles each having at least two flat surfaces, so that high thermal conductivity can be achieved even if large particles having a particle diameter of more than 100 μm are not used or the amount thereof is extremely small. The reason for this is not clear, but the present inventors estimate as follows. That is, it is presumed that when large particles having a particle diameter of more than 100 μm are not used or the amount thereof is extremely small in order to enable thinning, it was difficult to increase the filling property by using fillers having different particle diameters and to achieve both high thermal conductivity and high dischargeability, but by having such multifaceted particles each having two flat surfaces, the contact area between the particles is increased and a thermal conduction path is easily formed, so that thermal conductivity can be improved, and since other particles roll on a smooth flat surface of the multifaceted particles and flow resistance is suppressed as a whole, fluidity is improved and high dischargeability is obtained.

The proportion of the multifaceted particles (Pf1A-1mp) having a particle diameter of 5 μm or more and 50 μm or less in the thermally conductive filler is the proportion of the total area of the multifaceted particles (Pf1A-1mp) having a particle diameter in the range of 5 to 50 μm to the total area of all the particles having a particle diameter in the range of 5 to 50 μm (that is, the total area of the entire "particles (Pf1A-1)") identified in the scanning electron microscope image.

Here, the particles having a particle diameter in the range of 5 to 50 μm identified in a scanning electron microscope image mean primary particles having a major diameter in the range of 5 to 50 μm in an image obtained by observing the thermally conductive filler of the present invention with a scanning electron microscope.

Fig. 1 shows a scanning electron microscope image obtained by photographing multifaceted particles existing in a particle diameter range of 5 to 50 μm in one embodiment of the thermally conductive filler of the present invention at a magnification of 500 times.

A multifaceted particle 11 is an aluminum nitride particle having a polyhedral shape in which a plurality of flat surfaces a randomly exist and including at least two flat surfaces a. A multifaceted particle 12 is similarly an aluminum nitride particle having at least two flat surfaces a. In Fig. 1, a plurality of multifaceted particles are present in addition to the multifaceted particles 11 and 12.

In a scanning electron microscope image taken at a magnification of 500 times, the proportion of the multifaceted particles having at least two flat surfaces in the particles having a particle diameter of 5 μm or more and 50 μm or less is preferably 55% or more, more preferably 60% or more, still more preferably 65% or more, still further preferably 70% or more, and particularly preferably 80% or more.

In the aluminum nitride-based thermally conductive filler, the oxygen content of particles (that is, the "particles (Pf1A-1)") having a particle diameter in the range of 5 to 50 μm is preferably 0.5 mass% or less. In the aluminum nitride powder, the lower the amount of oxygen, the higher the thermal conductivity tends to be. As described above, in the present invention, including the multifaceted particles having a particle diameter of 5 to 50 μm is a reason why the high thermal conductivity can be imparted to the resin composition. Therefore, it is effective to reduce the oxygen content of the particles within the range (that is, the oxygen content of the multifaceted particles is reduced) in order to increase the thermal conductivity of the resin composition.

The oxygen content of particles (that is, the "particles (Pf1A-1)") having a particle diameter in the range of 5 to 50 μm can be determined by separating the particles in the above range by sieving, and measuring the total amount of oxygen by a high temperature pyrolysis method.

The aluminum nitride-based thermally conductive filler may contain other particles other than the aluminum nitride particles. Examples of such other particles include particles having high thermal conductivity, such as aluminum oxide, boron nitride, magnesium oxide, zinc oxide, silicon carbide, silicon nitride, and diamond. In particular, since aluminum nitride is easily oxidized, it is difficult to produce aluminum nitride when the particle diameter is small. Therefore, it is preferable to blend other particles as some/or all of the particles having a particle diameter of 0.05 μm or more and less than 5 μm. In particular, from the viewpoint of thermal conductivity and handleability, it is preferable to use aluminum oxide as some/or all of the particles (that is, the "particles (Pf1B)") having a particle diameter of 0.05 μm or more and less than 5 μm.

In a case where the aluminum nitride-based thermally conductive filler of the present invention contains aluminum nitride particles and aluminum oxide particles, the proportion of the aluminum oxide particles in the whole thermally conductive filler is preferably 1 to 30 vol%, and more preferably 5 to 20 vol%. In addition, the proportion of the aluminum oxide particles in the particles (that is, the "particles (Pf1B)") having a particle diameter of 0.05 μm or more and less than 5 μm is preferably 10 to 60 vol%, and more preferably 20 to 50 vol%. Here, in the case of a thermally conductive

filler including aluminum nitride particles and aluminum oxide particles, when the densities of aluminum nitride and aluminum oxide are assumed to be 3.26 g/$cm^3$ and 4.0 g/$cm^3$, respectively, the proportion of the aluminum oxide particles in the entire thermally conductive filler is preferably equivalent to 1.2 to 34 mass%, and more preferably equivalent to 6.1 to 23 mass%. In addition, the proportion of the aluminum oxide particles in the particles (that is, the "particles (Pf1B)") having a particle diameter of 0.05 μm or more and less than 5 μm is preferably equivalent to 12 to 65 mass%, and more preferably equivalent to 23 to 55 mass%.

[Method for Producing Thermally Conductive Filler]

As described above in the section of "Aluminum Nitride-based Thermally Conductive Filler", it is preferable that: the aluminum nitride-based thermally conductive filler contained in the resin composition of the present invention contain, in a volume-based particle size distribution measured by a laser diffraction scattering method, particles (that is, the "particles (Pf1)") having a particle diameter in a range of 100 μm or less in an amount of 90% or more in all particles;

wherein the aluminum nitride-based thermally conductive filler contains, in the volume-based particle size distribution, particles (that is, the "particles (Pf1A)") having a particle diameter of 5 μm or more and 100 μm or less in an amount of 40% to 90% in all particles, and particles (that is, the "particles (Pf1B)") having a particle diameter of 0.05 μm or more and less than 5 μm in an amount of 5% to 60% in all particles; and
wherein, in a scanning electron microscope image taken at a magnification of 500 times, 50% or more of particles (that is, the "particles (Pf1A-1)") having a particle diameter of 5 μm or more and 50 μm or less be particles having at least two flat surfaces, that is, it is preferable that:

the aluminum nitride-based thermally conductive filler be composed of the particles (Pf) containing 90% or more of particles (Pf1) having a particle diameter in a range of 100 μm or less when a volume-based particle size distribution is measured by a laser diffraction scattering method, where the amount of all particles is 100%,
wherein the particles (Pf) contain 40% to 90% of particles (Pf1A) having a particle diameter of 5 μm or more and 100 μm or less and 5% to 60% of particles (Pf1B) having a particle diameter of 0.05 μm or more and less than 5 μm, and contain particles (Pf1A-1) having a particle diameter of 5 μm or more and 50 μm or less, and
wherein, in a scanning electron microscope image taken at a magnification of 500 times, the particles (Pf1A-1) include 50% or more of the multifaceted particles each having at least two flat surfaces.

Such a thermally conductive filler can be easily obtained by mixing a known powder having a desired particle diameter with a powder containing multifaceted particles having a desired particle diameter. As an example, it can be produced by mixing an aluminum nitride powder having an average particle diameter of 5 μm or more and 100 μm or less and containing multifaceted particles, an aluminum oxide powder having an average particle diameter of 0.05 μm or more and less than 5 μm, and, as necessary, other powders at a predetermined ratio.

The mixing may be performed in advance before being combined with the resin, or may be performed simultaneously when being combined with the resin. Alternatively, the resin composition of the present invention may be obtained by preliminarily complexing some of the powder and the resin to give a resin composite, and then further complexing the remaining powder and the resin composite. The particle size distribution of the thermally conductive filler may be measured before mixing with the resin, and in a case where the thermally conductive filler is obtained by mixing a plurality of powders, the particle size distribution of each powder is measured, and the results of the obtained particle size distributions are integrated, whereby the particle size distribution of the thermally conductive filler can be obtained.

The thermally conductive filler may be surface-treated as necessary for the purpose of, for example, improving compatibility with a resin and water resistance. As the surface treatment, a known method can be applied. For example, the surface treatment can be performed using an organic silicon compound such as silicone oil, a silylating agent, or a silane coupling agent, an acid such as phosphoric acid, a phosphate, or a fatty acid, a polymer compound such as a polyamide resin, or an inorganic substance such as alumina or silica. In a case where the thermally conductive filler is prepared by mixing a plurality of powders, the surface treatment may be performed after the mixing, or the mixing may be performed after the surface treatment. In the case of mixing after performing the surface treatment, the powders subjected to surface treatments different from each other may be mixed, or the powder subjected to the surface treatment and the powder not subjected to the surface treatment may be mixed.

In a case where the multifaceted particles are aluminum nitride particles, as an example of a method for producing a powder containing such multifaceted particles, a production method including the following steps 1 and 2 can be mentioned.

Step 1: A step of mixing 100 parts by mass of a first aluminum nitride powder raw material having a size of 0.5 to 5 μm and a specific surface area of 1.2 to 16.0 $m^2$/g and 1 to 20 parts by mass of a second aluminum nitride powder raw material having an average particle diameter of 3 to 40 μm, a specific surface area of 0.05 to 1.8 $m^2$/g, and a ratio

(SA2/SA1) of the specific surface area (SA2) to the specific surface area (SA1) of the first aluminum nitride powder raw material being 0.8 or less, to give a raw material mixture

Step 2: A step of heating the raw material mixture to 1750°C to 2100°C under a supply of inert gas

<Step 1>

Step 1 is a step of mixing 100 parts by mass of the first aluminum nitride powder raw material having a size of 0.5 to 5 μm and a specific surface area of 1.2 to 16.0 $m^2/g$ and 1 to 20 parts by mass of a second aluminum nitride powder raw material having an average particle diameter of 3 to 40 μm, a specific surface area of 0.05 to 1.8 $m^2/g$, and a ratio (SA2/SA1) of the specific surface area (SA2) to the specific surface area (SA1) of the first aluminum nitride powder raw material being 0.8 or less, to give a raw material mixture.

The raw material mixture contains aluminum nitrides having different average particle diameters in a predetermined blending amount, and an aluminum nitride powder containing multifaceted particles each having at least two flat surfaces can be obtained through a heating step (Step 2) described later.

The specific surface area of each of the raw material powders can be determined, for example, by a BET method by $N_2$ adsorption using a fluidized surface area automatic measuring device Flow Sorb 2300 manufactured by Shimadzu Corporation.

The present inventors consider that due to the presence of an appropriate amount of the second aluminum nitride powder raw material having a relatively large average particle diameter, in the heating step, the first aluminum nitride powder raw material having a small average particle diameter is incorporated into the second aluminum nitride powder raw material by a sublimation reaction, and the second aluminum nitride powder raw material is crystal-grown to increase the particle diameter. The present inventors presume that the predetermined multifaceted particles are formed by such crystal growth. Furthermore, the present inventors presume that since oxygen present in the first aluminum nitride powder is effectively removed by the sublimation reaction, the multifaceted particles of aluminum nitride produced through the heating step have a low oxygen content.

As described above, by using the first and second aluminum nitride powder raw materials in combination in a predetermined blending amount, the crystal growth sufficiently proceeds, and aggregation of particles can also be suppressed.

The first aluminum nitride powder raw material has an average particle diameter of 0.5 to 5 μm and a specific surface area of 1.2 to 16.0 $m^2/g$, and preferably has an average particle diameter of 0.7 to 5 μm and a specific surface area of 1.2 to 12.0 $m^2/g$.

The second aluminum nitride powder raw material has an average particle diameter of 3 to 40 μm and a specific surface area of 0.05 to 1.8 $m^2/g$. The average particle diameter of the second aluminum nitride powder raw material can be appropriately selected according to a target average particle diameter, and is preferably 3 to 20 μm, and more preferably 5 to 15 um.

The blending amount of the second aluminum nitride powder raw material with respect to 100 parts by mass of the first aluminum nitride powder raw material in the raw material mixture is preferably 1 to 20 parts by mass, more preferably 2 to 15 parts by mass, and still more preferably 3 to 10 parts by mass. As described above, by appropriately adjusting the blending amounts of the first and second aluminum powder raw materials, an aluminum nitride powder containing multifaceted particles can be easily obtained.

The raw material mixture may contain an additive for liquid phase formation and an additive for promoting grain growth during firing. As the additive, for example, oxides of an alkali metal, an alkaline earth metal, or a rare earth element are generally known, and for example, yttrium oxides are representative. The content of the additive in the raw material mixture is preferably about 1 to 10 mass%.

As the first and second aluminum nitride powder raw materials, those generally used can be used without particular limitation as long as the materials have a predetermined average particle diameter. For example, the aluminum nitride powder raw materials may be those that are manufactured by a reduction nitriding method, those that are manufactured by a direct nitriding method such as a combustion synthesis method and that are adjusted to have a predetermined average particle diameter through a pulverization and classification step, or those that are manufactured by a manufacturing method other than these. Among them, the first and second aluminum nitride powder raw materials are preferably produced by a reduction nitriding method because a pulverization and classification step is not required.

It is also preferable to use the aluminum nitride powder produced through step 1 and step 2 as the second aluminum nitride powder raw material, and perform step 1 and step 2 again, to give an aluminum nitride powder having a still larger average particle diameter.

<Step 2>

The step 2 is a step of heating the raw material mixture prepared in Step 1 to 1750°C to 2100°C under supply of an

inert gas.

By setting the heating temperature to 1750°C or higher, crystal growth of aluminum nitride particles is promoted, and an aluminum nitride powder containing aluminum nitride particles having a flat surface is easily obtained. On the other hand, by setting the heating temperature to 2100°C or lower, aggregation due to fusion between particles can be suppressed. From such a viewpoint, the heating temperature is preferably 1750°C to 2100°C, more preferably 1800°C to 2050°C, and still more preferably 1800°C to 2000°C.

Also, the heating time is not particularly limited, and is preferably 1 to 20 hours, and more preferably 2 to 15 hours. When the heating time is 1 hour or more, crystal growth of the aluminum nitride particles sufficiently proceeds, and a smooth flat surface is easily formed. On the other hand, even when heating is performed for more than 20 hours, further grain growth hardly proceeds, and there is no advantage in industrial implementation.

Heating is performed under supply of an inert gas. That is, an aspect in which an inert gas is supplied into a heating device for accommodating and heating the raw material mixture to heat the raw material mixture is most preferable, but the heating can be performed while the inert gas is continuously supplied. In addition, a heating container (hereinafter, also referred to as a "setter") is filled with the raw material mixture and accommodated in the heating device, and it is preferable to use a carbon setter as the setter. As the inert gas, argon gas or nitrogen gas can be used, and nitrogen gas is preferable.

The pressure when performing heating under the supply of the inert gas is not particularly limited as long as the aluminum nitride powder containing the multifaceted particles can be obtained in an aspect in which the effect of the present invention is sufficiently obtained. In a typical and exemplary aspect of the present invention, the heating is performed under normal pressure.

<Other Steps>

After the step 2, a disintegration step may be performed as necessary. The disintegration is performed in order to disintegrate the bonds between the loosely bonded aluminum nitride particles, and is different from the pulverization in which the aluminum nitride particles are partially pulverized. Therefore, even if the disintegration step is performed, a shape of the multifaceted particle is maintained. The disintegration may be performed by a known method, and may be performed by, for example, a roll crusher mill, a jet mill, a ball mill, a masscoloider, or a jaw crusher.

Also, an oxidation step may be performed after the step 2, and the oxidation step is preferably performed after the disintegration step. By performing the oxidation step, decomposition due to contact with, for example, water can be prevented. The oxidation step can be performed by heating in an air atmosphere. The heating temperature in the oxidation step is not particularly limited, and is preferably 500°C to 900°C, and more preferably 600°C to 800°C. The heating time is not particularly limited, and is preferably 1 to 20 hours, and more preferably 5 to 15 hours. The oxygen content of the oxide film formed in the oxidation step is included in the oxygen content of the aluminum nitride-based thermally conductive filler, and by performing the oxidation step so that the oxygen content falls within the range of the oxygen content of the aluminum nitride powder described above, it becomes possible to impart excellent thermal conductivity to the resulting resin composition when the resin is filled therewith.

[Composition of Resin Composition]

The content of the thermally conductive filler contained in the resin composition of the present invention is not particularly limited, and the value on a lower limit side is preferably 300 parts by mass or more, more preferably 500 parts by mass or more, still more preferably 900 parts by mass or more, and the value on an upper limit side is preferably 5000 parts by mass or less, more preferably 3500 parts by mass or less, still more preferably 2000 parts by mass or less with respect to 100 parts by mass of the resin. When the content of the thermally conductive filler is not less than these lower limit values, the thermal conductivity of the resin composition is easily improved, and when the content of the aluminum nitride powder is not more than these upper limit values, the syringe dischargeability is easily improved.

In addition, the resin composition of the present invention may contain an additive such as a plasticizer, a vulcanizer, a curing catalyst, a curing accelerator, a reaction inhibitor, or a release agent as necessary.

[Method of Producing Resin Composition]

A method for producing the resin composition of the present invention is not particularly limited, and the resin composition can be produced by mixing a resin, a filler, and other components as necessary by a known method using, for example, a blender or a mixer. At the time of the mixing, the respective components may be simultaneously admixed in, for instance, a mixer, or the respective components may be sequentially admixed in, for instance, a mixer. The order of addition at this time is not particularly limited. Further, the mixing may be optionally performed under heating, or may be performed under an adjusted atmosphere such as an inert gas atmosphere.

[Application of Resin Composition]

The resin composition can be used as a heat dissipation member (heat dissipation material) for efficiently dissipating heat generated by electronic components mounted on, for example, home electric appliances, automobiles, or (notebook type) personal computers, and specific examples thereof include heat dissipation sheets, heat dissipation greases, heat dissipation gels, adhesives, semiconductor sealants, and underfills. That is, it can be said that the present invention provides a heat dissipation member including the resin composition.

When the resin composition of the present invention is used as a heat dissipation member, heat generated by an electronic component can be efficiently dissipated by using the resin composition of the present invention between a base material having a heat generating portion such as a semiconductor element and a base material having a cooling portion such as a heat sink and a housing. The electronic component according to the present invention is an electronic component having the resin composition of the present invention as a heat dissipation member, and specifically, an electronic component including a heat dissipation member including the resin composition of the present invention and a base material having a heat generating portion, wherein the heat dissipation member is disposed so as to be in contact with the heat generating portion. In one of preferred and exemplary aspects of the present invention, it is preferable that the electronic component be an electronic component including a heat dissipation member including the resin composition of the present invention, a base material having a heat generating portion, and a base material having a cooling portion, the heat dissipation member being disposed so as to be in contact with the heat generating portion, and the heat dissipation member being disposed so as to be in contact with both the heat generating portion and the cooling portion. Also, in another suitable and exemplary aspect similar to the above aspect, the electronic component according to the present invention is an electronic component including a heat dissipation member including the resin composition of the present invention, a base material having a heat generating portion, and a base material having a cooling portion, wherein the heat dissipation member is disposed so as to be in contact with the base material having the heat generating portion, and in particular, the heat dissipation member is disposed so as to be in contact with both the base material having the heat generating portion and the base material having the cooling portion. As described above, the resin composition of the present invention has a high thermal conductivity (TC), and in addition, it is easy to reduce the thickness (L) of a layer of the resin composition between base materials such as a semiconductor element, a heat sink, and a housing, so that a thermal resistance (R) can be easily reduced. Furthermore, since the syringe dischargeability is high, a contact thermal resistance (Rc) at the boundary between a base material such as a semiconductor element, a heat sink, or a housing and the resin composition can also be reduced, so that it is easy to make the thermal resistance (R) extremely low.

The method for producing an electronic component using the resin composition of the present invention is not particularly limited, and examples thereof include applying the resin composition of the present invention with which a syringe is filled onto one base material, and then superimposing the other base material and pressing them with a force of 0.05 to 0.5 MPa. The BLT of the resin composition of the present invention measured after the resin composition is sandwiched between two 10 mm × 10 mm silicon chips and a force of 50 N (that is, 0.5 MPa) is applied to the resin composition for 60 seconds is as small as 100 μm or less. Therefore, it is not necessary to press the resin composition at a high pressure in order to make the resin composition thin. Therefore, adverse effects on the base material can be suppressed, and the thickness of the layer of the resin composition can be easily reduced without using special equipment, whereby it is also possible to produce an electronic component with high production efficiency.

## EXAMPLES

Hereinafter, the present invention will be further specifically described with reference to Examples, but the present invention is not limited to these Examples.

[Measurement Method]

Various physical properties in Examples and Comparative Examples were measured by the following methods.

(1) Particle Size Distribution Measurement

For each of AL1 to AL7 and AO1 described later, a powder was dispersed in a solution obtained by adding a 5% aqueous sodium pyrophosphate solution to 90 ml of water, and the resulting dispersion was dispersed by a homogenizer, and the particle size distribution was measured on a volume basis using a laser diffraction particle size distribution apparatus ("MICROTRAC MT3300 EXII" manufactured by MicrotracBEL Corp.). The volume-based particle size distribution of the thermally conductive filler was obtained by being synthesized by calculation from the above results according to the filler composition to be blended in each resin composition.

(2) Existing Proportion of Multifaceted Particles

An SEM photograph (Acceleration voltage 15 kV, secondary electron detection) of the aluminum nitride powder at a magnification of 500 times was taken using a scanning electron microscope ("TM3030" manufactured by Hitachi High-Technologies Corporation). From the SEM photograph, the presence or absence of particles each having two or more flat surfaces was confirmed among aluminum nitride primary particles having a particle diameter (major axis) of 5 μm or more and 50 μm or less.

For the existing proportion of the multifaceted particles, the proportion of the total area of the multifaceted particles to the total area of all the aluminum nitride primary particles having a particle diameter of 5 μm or more and 50 μm or less was calculated from the image analysis of the SEM photograph, and this was taken as the existing proportion of the multifaceted particles. Specifically, it was obtained by the following formula.

Existing proportion (%) of multifaceted particles = [(Total area of multifaceted particles)/(Total area of all aluminum nitride primary particles having particle diameter within particle diameter range of 5 μm or more and 50 μm or less)] × 100

(3) Thermal Conductivity of Resin Composition

The resin composition was hot-pressed at 100°C, to give a sheet having a thickness of 7 mm. The thermal conductivity of the obtained sheet was measured by a hot disk method thermophysical property measurement apparatus (TPS500 manufactured by Kyoto Electronics Manufacturing Co., Ltd.).

(4) Syringe Discharge Amount of Resin Composition

A syringe "PSY-30F" (an inner diameter of a body portion of the syringe for storing the sample is 22 mm, and an inner diameter of a tip portion (tip discharge portion) for discharging the sample is 2 mm) manufactured by Musashi engineering was filled with the resin composition, and then the syringe was allowed to stand in a thermostatic chamber at 25°C for 6 hours. Thereafter, the resin composition was discharged from the syringe for 1 minute at a discharge pressure of 0.62 Pa while being held in a thermostatic chamber at 25°C, and the discharge amount per 1 minute was measured from the amount of the discharged resin composition.

(5) Measurement of BLT

0.02 ml of the resin composition was sandwiched between two 10 mm × 10 mm silicon chips, and a force of 50 N was applied thereto for 60 seconds. Specifically, the resin composition was weighed and placed on a silicon chip, another silicon chip was stacked thereon, the resin composition was sandwiched between two silicon chips, and a sample was obtained by pressing them with a force of 50 N for 60 seconds using a push-pull gauge (SVH-1000N manufactured by IMADA Co., Ltd.). Next, the thickness of the sample was measured by a micrometer (high-precision digimatic micrometer MDH-25MB manufactured by Mitutoyo Corporation). Thereafter, the thickness of only the resin composition was calculated by subtracting the thickness of the silicon chip measured in advance from the thickness of the obtained sample, and this was defined as BLT.

(6) Evaluation of Thermal Resistance (BLT)

Using the sample for measurement of BLT described above, the thermal resistance value at 25°C was measured by a laser flash method (LFA467 HyperFlash manufactured by NETZSCH). A value obtained by subtracting the thermal resistance value of the silicon chip measured in advance was defined as a thermal resistance value, and a value of less than 10 $mm^2$·K/W was evaluated as "O", and a value of 10 $mm^2$ ·K/W or more was evaluated as "X".

(7) Evaluation of Thermal Resistance (100 μm)

The resin composition was sandwiched between two silicon chips, and a force of 50 N or less was applied for 60 seconds so that the thickness of the resin composition was 100 μm. Specifically, 0.02 ml of the resin composition was weighed and placed on a 10 mm × 10 mm silicon chip, another 10 mm × 10 mm silicon chip was stacked thereon, the resin composition was sandwiched between two silicon chips, and a sample was obtained by pressing them using a push-pull gauge (SVH-1000N manufactured by IMADA Co., Ltd.). Using the present sample, the thermal resistance value was measured by a laser flash method in the same manner as described above, and the thermal resistance value of less than 20 $mm^2$ ·K/W was evaluated as "O", the thermal resistance value of less than 25 $mm^2$ ·K/W and 20 $mm^2$ ·K/W or more was

evaluated as "Δ", and the thermal resistance value of 25 $mm^2 \cdot K/W$ or more was evaluated as "X".

[Raw Materials Used]

The following raw materials were used.

· AL1: Aluminum nitride powder containing multifaceted particles having a particle diameter of 5 μm or more and 50 μm or less produced by the method of Synthesis Example 1 below
· AL2: Aluminum nitride powder containing multifaceted particles having a particle diameter of 5 μm or more and 50 μm or less produced by the method of Synthesis Example 2 below
· AL3: Aluminum nitride powder containing multifaceted particles having a particle diameter of 5 μm or more and 50 μm or less produced by the method of Synthesis Example 3 below
· AL4: Commercially available aluminum nitride powder (average particle diameter 1 μm)
· AL5: Commercially available aluminum nitride powder (average particle diameter 30 μm)
· AL6: Commercially available aluminum nitride powder (average particle diameter 50 μm)
· AL7: Commercially available aluminum nitride powder (average particle diameter 120 μm)
· AL8: Commercially available aluminum nitride powder (average particle diameter 20 μm)
· AO1: Commercially available aluminum oxide powder (average particle diameter: 0.3 μm)

(Synthesis Example 1)

100 parts by mass of an aluminum nitride powder raw material having an average particle diameter of 1.0 μm and a specific surface area of 2.81 $m^2/g$ and 5 parts by mass of an aluminum nitride powder raw material having an average particle diameter of 5.0 μm and a specific surface area of 1.02 $m^2/g$ were mixed to give a raw material mixture.

The raw material mixture was accommodated in a heating device, nitrogen gas was supplied into the device to form a nitrogen atmosphere, and heating was performed at 1950°C for 3 hours. Heating was performed under normal pressure, and disintegration and an oxidation treatment were performed, to give an aluminum nitride powder (AL1) having an average particle diameter of 8.0 μm and a specific surface area of 0.60 $m^2/g$.

(Synthesis Example 2)

100 parts by mass of an aluminum nitride powder raw material having an average particle diameter of 0.5 μm and a specific surface area of 15.70 $m^2/g$ and 10 parts by mass of an aluminum nitride powder raw material having an average particle diameter of 7.8 μm and a specific surface area of 0.62 $m^2/g$ were mixed to give a raw material mixture.

The raw material mixture was accommodated in a heating device, nitrogen gas was supplied into the device to form a nitrogen atmosphere, and heating was performed at 2000°C for 5 hours. Heating was performed under normal pressure, and disintegration and an oxidation treatment were performed, to give an aluminum nitride powder (AL2) having an average particle diameter of 18.7 μm and a specific surface area of 0.20 $m^2/g$.

(Synthesis Example 3)

100 parts by mass of an aluminum nitride powder raw material having an average particle diameter of 1.0 μm and a specific surface area of 2.81 $m^2/g$ and 20 parts by mass of an aluminum nitride powder raw material having an average particle diameter of 17.8 μm and a specific surface area of 0.21 $m^2/g$ were mixed to give a raw material mixture.

The raw material mixture was accommodated in a heating device, nitrogen gas was supplied into the device to form a nitrogen atmosphere, and heating was performed at 1950°C for 10 hours. Heating was performed under normal pressure, and disintegration and an oxidation treatment were performed, to give an aluminum nitride powder (AL3) having an average particle diameter of 29.4 μm and a specific surface area of 0.17 $m^2/g$.

(Example 1)

A resin composition was prepared by mixing a resin, 1426 parts by mass of a thermally conductive filler based on 100 parts by mass of the resin, 20 ppm by mass of a platinum-based catalyst (platinum 1,2-divinyltetramethyldisiloxane complex) as a catalyst in terms of a platinum element with respect to the resin, and 3000 ppm by mass of 1-ethynyl-1-cyclohexanol as a reaction inhibitor with respect to the resin using a blade-type stirrer, and the thermal conductivity, syringe discharge amount, BLT, and thermal resistance of the obtained resin composition were evaluated. The resin is a mixture obtained by adding 20 parts by mass of decyltrimethoxysilane as the alkoxysilyl group-containing compound (c) to 100 parts by mass of a mixture obtained by mixing a polyorganosiloxane (a) having on average two or more alkenyl groups

each bonded to a silicon atom in one molecule and a polyorganosiloxane (b) having on average two or more hydrosilyl groups in one molecule at a mass ratio of 97:3 (the number of hydrosilyl groups of the polyorganosiloxane (b) having a hydrosilyl group is 0.7 with respect to one alkenyl group bonded to a silicon atom of the polyorganosiloxane (a) having an alkenyl group). The thermally conductive filler is obtained by mixing AL1 in the proportion of 44 mass%, AL4 in the proportion of 33 mass%, and AO1 in the proportion of 23 mass%.

The composition of the thermally conductive filler and the resin composition, and the evaluation results of the obtained resin composition are shown in Tables 1 and 2-1.

(Examples 2 to 4 and Comparative Examples 1 to 4)

Except that the compositions of the thermally conductive filler and the resin composition were changed as described in Tables 1, 2-1, and 2-2, the same procedure as in Example 1 was carried out to give a resin composition, and evaluation was performed. The compositions of the thermally conductive filler and the resin composition and the evaluation results of the obtained resin composition are shown in Tables 1, 2-1, and 2-2.

[Table 1]

[Table 1]

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Filler composition [mass%] | AL1 | 44% | | | | | | | |
| | AL2 | | 43% | | | | | 23% | |
| | AL3 | | | 50% | 50% | | | | |
| | AL4 | 33% | 38% | 38% | 38% | 38% | 38% | 16% | 38% |
| | AL5 | | | | | | 50% | | |
| | AL6 | | | | | 50% | | | |
| | AL7 | | | | | | | 46% | |
| | AL8 | | | | | | | | 43% |
| | AO1 | 23% | 19% | 12% | 12% | 12% | 12% | 14% | 19% |

[Table 2-1]

[Table 2-1]

| | | Unit | Example 1 | Example 2 | Example 3 | Example 4 |
|---|---|---|---|---|---|---|
| Content of thermally conductive filler with respect to 100 parts by mass of resin | | Part(s) by mass | 1426 | 1718 | 1703 | 1047 |
| Physical properties of thermally conductive filler | Proportion of particles having particle diameter of 100 μm or less in all particles | % | 100.0 | 100.0 | 100.0 | 100.0 |
| | Proportion of particles having particle diameter of 5 μm or more and 100 μm or less in all particles | % | 48.8 | 60.9 | 67.0 | 67.0 |
| | Proportion of particles having particle diameter of 0.05 μm or more and less than 5 μm in all particles | % | 51.2 | 39.1 | 33.0 | 33.0 |
| | Proportion of multifaceted particles in particles having particle diameter of 5 μm or more and 50 μm or less | % | 95.6 | 96.8 | 98.1 | 98.1 |
| Physical properties of resin composition | Thermal conductivity | W/m·k | 6.1 | 9.3 | 10.2 | 6.1 |
| | Syringe discharge amount | g/min | 20.0 | 33.8 | 32.1 | 213.0 |
| | BLT | μm | 40 | 36 | 56 | 51 |
| Evaluation result | Evaluation of thermal resistance (BLT) | | O | O | O | O |
| | Evaluation of thermal resistance (100 μm) | | O | O | O | O |

[Table 2-2]

[Table 2-2]

| | | Unit | Comparative Example 1 | Comparative Example 2 | Comparative Example 3 | Comparative Example 4 |
|---|---|---|---|---|---|---|
| Content of thermally conductive filler with respect to 100 parts by mass of resin | | Part(s) by mass | 1703 | 1047 | 1992 | 1718 |
| Physical properties of thermally | Proportion of particles having particle diameter of 100 μm or less in all particles | % | 98.0 | 100.0 | 70.6 | 100.0 |

(continued)

| | | Unit | Comparative Example 1 | Comparative Example 2 | Comparative Example 3 | Comparative Example 4 |
|---|---|---|---|---|---|---|
| conductive filler | Proportion of particles having particle diameter of 5 μm or more and 100 μm or less in all particles | % | 65.6 | 67.0 | 41.5 | 63.5 |
| | Proportion of particles having particle diameter of 0.05 μm or more and less than 5 μm in all particles | % | 32.4 | 33.0 | 29.1 | 36.5 |
| | Proportion of multifaceted particles in particles having particle diameter of 5 μm or more and 50 μm or less | % | 0.4 | 0.2 | 98.5 | 35.2 |
| Physical properties of resin composition | Thermal conductivity | W/m·k | 9.8 | 5.2 | 12.4 | 10.1 |
| | Syringe discharge amount | g/min | 37.2 | 222.0 | 43.2 | 8.0 |
| | BLT | μm | 106 | 72 | 210 | 63 |
| Evaluation result | Evaluation of thermal resistance (BLT) | | X | X | X | X |
| | Evaluation of thermal resistance (100 μm) | | - | Δ | - | X |

As for the evaluation results, in the resin composition of Example 1 to 4 having a thermal conductivity of 6.0 W/m·K or more, a syringe discharge amount of 10 g/min or more, and a BLT of 100 μm or less, when the thickness of the resin composition layer was 100 μm, the thermal resistance was extremely low, and good evaluation results were obtained. On the other hand, when the resin composition of Comparative Example 4 having a high thermal conductivity but a syringe discharge amount of less than 10 g/min was used and the thickness of the resin composition layer was 100 μm in the same manner, the thermal resistance was high. In addition, when the resin composition of Comparative Example 2 having a syringe discharge amount of 10 g/min or more but a low thermal conductivity was used and the thickness of the resin composition layer was 100 μm in the same manner, the thermal resistance was high. In the resin compositions of Comparative Example 1 and Comparative Example 3 having a large BLT, the thickness of the resin composition could not be made 100 μm. The evaluation of the thermal resistance is an evaluation in which two silicon chips represent as a base material in an electronic component, and since the thermal resistance of the whole including the silicon chips is measured and only the thermal resistance of the silicon chip is subtracted therefrom, the evaluation is made in consideration of both the thermal resistance (L/TC) and the contact thermal resistance (Rc) of the resin composition itself. For example, when comparing Example 2 and Comparative Example 4 in which the thermal conductivity of the resin composition is equivalent but the syringe dischargeability is greatly different, the evaluation results of the thermal resistance are greatly different although the thermal conductivity and the thickness of the resin composition are equivalent (L/TC is equivalent). The present inventors presume that this is because the contact thermal resistance is extremely low in Example 2 in which the syringe dischargeability is high.

Furthermore, the resin compositions of Example 1 to 4 have a BLT thickness and an extremely low thermal resistance. From this, by using the resin composition of the present invention, it is possible to easily form a resin composition layer having a thickness of less than 100 μm and having extremely low thermal resistance during manufacturing of an electronic component.

Reference Signs List

| | |
|---|---|
| 11, 12 | Multifaceted particle |
| a | Flat surface |

## Claims

1. A resin composition comprising a resin and an aluminum nitride-based thermally conductive filler,

   wherein a thermal conductivity of the resin composition measured by a hot disk method is 6.0 W/m·K or more,
   wherein a discharge amount when the resin composition is charged into a syringe having a tip discharge portion with an inner diameter of 2 mm and discharged at a discharge pressure of 0.62 MPa is 10 g/min or more, and
   wherein a thickness of the resin composition measured after 0.02 ml of the resin composition is sandwiched between two 10 mm × 10 mm silicon chips and a force of 50 N is applied to the resin composition for 60 seconds is 100 μm or less.

2. The resin composition according to claim 1,

   wherein the thermally conductive filler contains, in a volume-based particle size distribution measured by a laser diffraction scattering method, particles having a particle diameter in a range of 100 μm or less in an amount of 90% or more in all particles,
   wherein the thermally conductive filler contains, in the volume-based particle size distribution, particles having a particle diameter of 5 μm or more and 100 μm or less in an amount of 40% to 90% in all particles, and particles having a particle diameter of 0.05 μm or more and less than 5 μm in an amount of 5% to 60% in all particles, and
   wherein, in a scanning electron microscope image taken at a magnification of 500 times, 50% or more of particles having a particle diameter of 5 μm or more and 50 μm or less are multifaceted particles each having at least two flat surfaces.

3. The resin composition according to claim 2, wherein the multifaceted particles are aluminum nitride particles.

4. The resin composition according to claim 1, wherein the resin is a silicone resin.

5. The resin composition according to claim 4, wherein the silicone resin contains a polyorganosiloxane having, on average, two or more alkenyl groups bonded to a silicon atom in one molecule and a polyorganosiloxane having, on average, two or more hydrosilyl groups in one molecule, and the resin composition further comprises a platinum-based catalyst.

6. A heat dissipation member comprising the resin composition according to any one of claims 1 to 5.

7. An electronic component comprising: the heat dissipation member according to claim 6; and a base material having a heat generating portion, wherein the heat dissipation member is disposed so as to be in contact with the heat generating portion.

[Fig. 1]

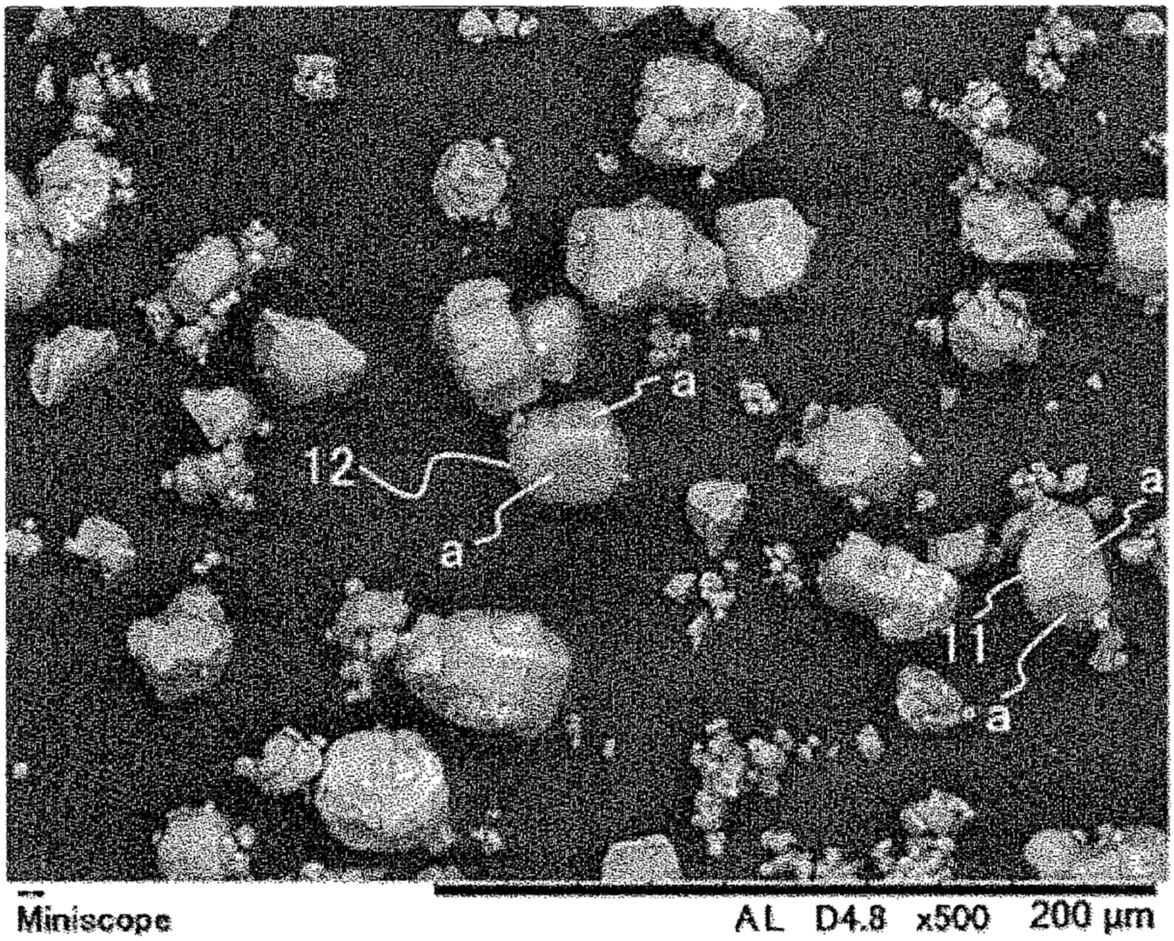

**INTERNATIONAL SEARCH REPORT**

International application No.
**PCT/JP2024/015815**

**A. CLASSIFICATION OF SUBJECT MATTER**

***C08L 101/00***(2006.01)i; ***C01B 21/072***(2006.01)i; ***C08K 3/01***(2018.01)i; ***C08K 3/28***(2006.01)i; ***C08L 83/05***(2006.01)i; ***C08L 83/07***(2006.01)i
FI: C08L101/00; C08L83/05; C08L83/07; C08K3/28; C08K3/01; C01B21/072 Z

According to International Patent Classification (IPC) or to both national classification and IPC

**B. FIELDS SEARCHED**

Minimum documentation searched (classification system followed by classification symbols)

C08L101/00; C01B21/072; C08K3/01; C08K3/28; C08L83/05; C08L83/07

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/262449 A1 (MOMENTIVE PERFORMANCE MATERIALS JAPAN LLC) 30 December 2020 (2020-12-30)<br>claims, example 1 | 1-7 |
| A | WO 2023/013441 A1 (TOKUYAMA CORPORATION) 09 February 2023 (2023-02-09)<br>entire text | 1-7 |
| P, A | JP 2023-62399 A (SHIN-ETSU CHEMICAL CO., LTD.) 08 May 2023 (2023-05-08)<br>entire text | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/015815**

| Patent document cited in search report | Publication date (day/month/year) | Patent family member(s) | Publication date (day/month/year) |
|---|---|---|---|
| WO 2020/262449 A1 | 30 December 2020 | US 2022/0267533 A1<br>claims, example 1<br>EP 3992250 A1 | |
| WO 2023/013441 A1 | 09 February 2023 | TW 202313815 A | |
| JP 2023-62399 A | 08 May 2023 | US 2023/0167347 A1<br>entire text<br>EP 4169998 A1<br>CN 116004015 A<br>KR 10-2023-0057269 A<br>TW 202317690 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022130665 A
- JP 2020169231 A